# EUROPEAN PATENT APPLICATION

(11) **EP 2 079 188 A1**
(43) Date of publication of application: **15.07.2009**
(21) Application number: 08250086.9
(22) Date of filing: 09.01.2008
(51) Int. Cl.: H04L 12/24

(54) **Out-of-band method of managing an MPLS communications network**

(71) Applicant: British Telecommunications public limited company, 81 Newgate Street London EC1A 7AJ (GB)
(72) Inventor: The designation of the inventor has not yet been filed
(74) Representative: Lofting, Coreena Fiona Anne

(57) **Abstract**

A method of managing a multi-protocol label switched (MPLS) network out of band (OOB), the method comprising: indicating a MPLS traffic unit related to a management function by generating at a MPLS node in a MPLS communications network a said MPLS traffic unit having a MPLS header label field; assigning a predetermined label field value to said header label field, said value being known as being assigned in said MPLS network to indicate that said MPLS traffic unit relates to said management function; and propagating said MPLS traffic unit between a plurality of nodes of said MPLS communications network, whereby a receiving MPLS node when processing said MPLS header is able to determine from the predetermined label field value that said MPLS traffic unit comprises data relating to said management function.

## Description

The present invention relates to a method of managing a multi-protocol label switched (MPLS) communications network out-of-band (OOB), particularly but not exclusively to a method of providing an OOB control plane (CP) and/or an out-of-band management plane (MP) in an MPLS communications network.

MPLS is a data transport mechanism for packet-switched computer and telecommunications networks. MPLS has been designed to provide a unified transport service for both circuit-based clients and packet-switching clients and can be used to carry many different types of traffic, for example, Internet Protocol (IP) packets as well as native Asynchronous Transfer Mode (ATM), Ethernet and Synchronous Optical NETwork (SONET) frames. More recently, MPLS has evolved and CO-PS mode MPLS networks that respect the requirements of a connection are now known in the art.

It is known in the art that in Generalised MPLS (GMPLS) the CP and MP are forced to run OOB when applied to Connection Oriented Circuit Switched (CO-CS) mode layer networks, e.g. Synchronous Digital Hierarchy (SDH), Optical Transport Network (OTN), but this is incompatible with MPLS networks based on the Label Distribution Protocol (LDP).

Several problems with MPLS are known in the art and include issues with LSP Ping (as an OAM function) for detecting/diagnosing defects in Label Switch Paths (LSP) and the increased requirement for the carriage of Ethernet clients with bit rates 1G/10G/+ which MPLS networks based on a Label Distribution Protocol (LDP) using PseudoWires (PWs) will find very difficult to support. Although some solutions have been proposed to mitigate the above problems, they are actually symptoms of deeper architectural causal problems, one of which is the use of the LDP form of MPLS which is also often used with Equal Cost Multi-Path (ECMP) and Penultimate Hop Popping (PHP), and these also cause problems. A limitation of these known solutions is that LDP (and PHP) violate the architectural requirement in MPLS that a connection must only have a single source and that traffic units must not be re-ordered. ECMP also violates transparency requirements of a client/server layer network relationship. Moreover, LDP/PHP/ECMP only account for some of the simpler architectural problems in MPLS. Other problems include:
i) MPLS does not treat its clients consistently and so cannot form a proper layer network as it does not have consistent Characteristic Information (CI). For example, MPLS has a special relationship with IP (which can appear as a peer traffic unit on a MPLS interface, or be a null encapsulated client) and some fields of the MPLS traffic unit (especially the label field) do not have consistent functional semantics. Further, the MPLS traffic unit is not functionally complete, and in particular it has no OAM flag field.
ii) Neither MPLS nor PWs provide a transparent client/server relationship. Transparency here means that the server does not attempt to infer any meaning from the bit structure of the client traffic units and the server must not modify the client traffic units in any way.
iii) LDP and PHP each cause a merging behaviour which, by violating the rules of a connection, prevents deterministic resource assignment/management and, as a consequence, makes other operational functions (such as fault detection/handling and performance monitoring) more complex and costly to implement. As a result of this resources cannot be deterministically managed on a per customer/service instance. This means that the whole MPLS network has to be designed and operated to the demands of the most stringent customer service level agreement which is not cost effective for MPLS providers.
iv) The MPLS traffic unit has an inadequate functional field structure and in particular the label field has too many semantics (i.e., a MPLS traffic unit does not have consistent CI), which means that when connectivity errors occur a wrong decision might be made when interpreting the semantic of the label field.
vi) MPLS does not have an Out Of Band (OOB) control/management plane solution as LDP prevents this.

The invention seeks to provide a MPLS network with an OOB CP and/or MP by assigning one or more label field header values which are well-known (for their function) on each link (and ideally consistent on each link in a network-wide sense) to designate a MPLS traffic unit as carrying CP/MP protocol information. Preferably, the label field value(s) used for this purpose is(are) reserved is taken from those still available in the specially reserved 0-15 label set according to the MPLS standards defined by the ITU and IETF.

### SUMMARY STATEMENTS OF THE INVENTION

A first aspect of the invention seeks to provide a method of managing a multi-protocol label switched network out of band, the method comprising:
indicating an multi-protocol label switched traffic unit relates to a management function by generating at an multi-protocol label switched node in an multi-protocol label switched communications network a said multi-protocol label switched traffic unit having a multi-protocol label switched header label field;
assigning a predetermined label field value to said header label field, said value being known as being assigned in said multi-protocol label switched network to indicate that said multi-protocol label switched traffic unit relates to said management function; and
propagating said multi-protocol label switched traffic unit between a plurality of nodes of said multi-protocol label switched communications network,
whereby a receiving multi-protocol label switched node when processing said header of said multi-protocol label switched traffic unit is able to determine from the predetermined label field value that said multi-protocol label switched traffic unit comprises data relating to said management function.

In one embodiment, said a predetermined label field value indicates said type of management function.

In one embodiment, the management function is a control plane function, whereby a control plane for the multi-protocol label switched communications network is implemented as an out of band control plane.

In one embodiment, the management function is a type of management plane function, whereby a management plane for the multi-protocol label switched communications network is implemented as an out of band management plane.

In one embodiment, said method further comprises the receiving multi-protocol label switched node causing the management function indicated by the label value to be invoked.

In one embodiment, said predetermined label field value is a label field value uniquely assigned within said multi-protocol label switched communications network.

In one embodiment, said predetermined label field value uniquely assigned within said multi-protocol label switched communications network is reserved by an multi-protocol label switched standards body as a globally unique label field value.

In one embodiment, one or more predetermined label field values uniquely assigned within said multi-protocol label switched communications network indicate respectively one or more control plane functions and one or more other predetermined label field values uniquely assigned within said multi-protocol label switched communications network indicate one or more respective management plane functions.

In one embodiment, the value assigned in the multi-protocol label switched header indicates the function to be performed.

In one embodiment, the value assigned indicates the higher-layer functionality to be invoked by the receiving node to implement the function.

Another aspect of the invention seeks to provide a node in a multi-protocol label switched communications network, the node comprising:
a processor for generating an multi-protocol label switched traffic unit having a multi-protocol label switched communications network header and for assigning a label field value to said header which indicates the type of management data comprising said multi-protocol label switched traffic unit; and
a transmitter for propagating said multi-protocol label switched traffic unit to another node of said multi-protocol label switched communications network.

In one embodiment, said assigned label field value is a unique label field value in said multi-protocol label switched communications network.

In one embodiment, said type of management data causes a receiving node of said multi-protocol label switched traffic unit to invoke control plane functionality in said multi-protocol label switched network.

In one embodiment, said type of management data causes a receiving node of said multi-protocol label switched traffic unit to invoke management plane functionality in said multi-protocol label switched network.

Another aspect of the invention seeks to provide a signal transmitted in a multi-protocol label switched communications network which includes a multi-protocol label switched traffic unit having a multi-protocol label switched header in which a label field value has been assigned to said header which is unique in said multi-protocol label switched network to indicate to a receiving node of said signal that said multi-protocol label switched traffic unit includes control plane data.

Another aspect of the invention seeks to provide a signal transmitted in a multi-protocol label switched communications network which includes a multi-protocol label switched traffic unit having a multi-protocol label switched header in which a label field value has been assigned to said header which is unique in said multi-protocol label switched network to indicate to a receiving node of said signal that said multi-protocol label switched traffic unit includes management plane data.

Another aspect of the invention seeks to provide a multi-protocol label switched network comprising:
a plurality of network nodes, at least one node comprising:
   a traffic generator arranged to generate a multi-protocol label switched traffic unit including management data and to assign to said multi-protocol label switched traffic unit a header field value having a predetermined label field value indicating said multi-protocol label switched traffic unit includes said type of management data; and
transmitters and/or receivers arranged to propagate said multi-protocol label switched traffic units between nodes of said multi-protocol label switched network,
wherein said value is assigned by all of said plurality of nodes in said multi-protocol label switched network to indicate that a said multi-protocol label switched traffic unit includes said type of management data, whereby when a node in said network receives a said multi-protocol label switched traffic unit with a header having said predetermined label value, said receiving node is arranged to process said header to extract said management data according to its type.

In one embodiment, said receiving node processing said header then causes the corresponding management functionality to be invoked in said multi-protocol label switched network.

In one embodiment, said assigned label field value is a globally unique label field value.

For example, the value may be globally unique and reserved by a service provider or have one of the available values between 4 and 13 and 15 which have been reserved by MPLS standards bodies well-known to those of ordinary skill in the art such as the IETF and ITU.

In one embodiment, said management functionality comprises control plane functionality or management plane functionality.

The aspects of the invention and preferred embodiments are also as set out by the accompanying claims.

Aspects of the invention as set out above and in the accompanying independent claims may be combined with each other and with any of the preferred embodiments and accompanying dependent claims in any suitable form apparent to one of ordinary skill in the art.

The preferred embodiment of the invention will now be described with reference to the accompanying drawings which are by way of example only and in which:
Figure 1 shows schematically a MPLS header known in the art; and
Figure 2 shows schematically an embodiment of a MPLS OOB CP/MP according to the invention.
The best mode of the invention will now be described with reference to the accompanying drawings, which may omit one or more details a person of ordinary skill in the art would find apparent as necessary to implement the invention for the sake of clarity.

As is well known in the art, MPLS is provided as an intermediate layer between the layer 2 and layer 3 headers of a typical packet. Several MPLS standards have already been defined by the Internet Engineering Task Force (IETF) standards body and these documents are considered to be incorporated herein by reference. The ITEF Request for Comments document RFC 3032 (amongst others) describes MPLS Label Stack Encoding and is incorporated herein by reference.

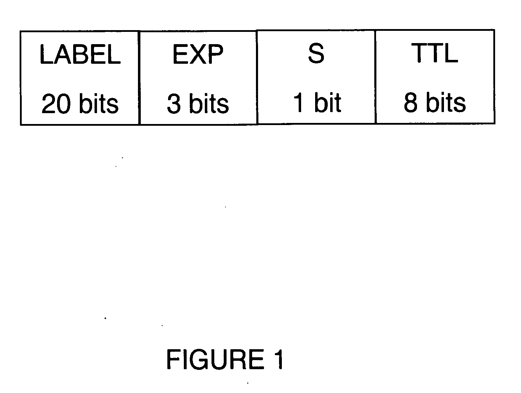

Figure 1 of the accompanying drawings shows a 32-bit MPLS header as is known in the art. In Figure 1, the MPLS header comprises four fields: an 8-bit time to live (TTL) field, a 1-bit stack (S) function field, a 3-bit field (EXP) for experimental functions, and a 20-bit label field as are well known in the art. The 20-bit label field provides 2²⁰ possible label values which, apart from sixteen reserved values (0 to 15), are of local link significance only in the MPLS network. The sixteen reserved values are globally well-known label field values. Of the sixteen reserved label values available, label values 0 to 3 and 14 already have a defined use. Label values 4 to 13 and 15 are also reserved but do not have predefined usage according to the original MPLS standards, although one or more values may be reserved for other use without being detrimental to the implementation of some embodiments of the invention.

In an exemplary embodiment of the invention, a CP and/or MP capable of enforcing CO-PS connectivity is provided by the use of a special label field value in the header of a MPLS traffic unit (or equivalently, MPLS packet) to indicate the type of functionality the MPLS traffic unit relates to. This special label field value must be known (with respect to its functional semantic) on a given link and should ideally be unique within a MPLS network, i.e., it should have a network-wide well-known functional significance. In one embodiment of the invention, the special label field value is selected from a value remaining available in the 0-15 reserved set of MPLS values. The special label value assigned indicates that the MPLS traffic unit (i.e., the MPLS packet) is carrying control or management protocols as opposed to "normal" client traffic. By assigning a globally unique reserved label field value, it is possible for one embodiment of the invention to support a logically out of band control/management plane in a MPLS network.

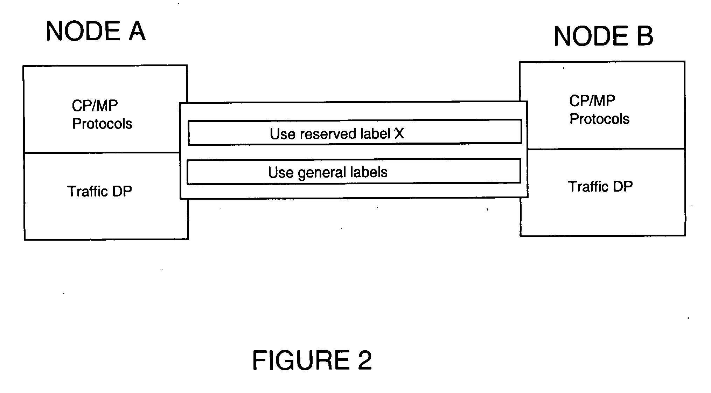

The use of such a "special" label value is shown schematically in Figure 2 of the accompanying drawings. Figure 2 also shows schematically how MPLS traffic units forming the data plane (DP) traffic between two nodes A and B use the unreserved general labels (of which 2²⁰-16 are available).

The term "control plane" is defined herein as functionality which is associated with the protocols relating to network topology discovery, route calculation and signalling. The control plane may comprise any suitable communications protocols which implement the different functions. Effectively the control plane is a sub-set of the connectivity configuration aspects of the management plane (or equivalent the connectivity configuration level of functionality) by which the apparatus (for example, the MPLS network nodes) are connected by a communications network support. In this context, the connectivity configuration management functions which are related to the specific tasks of discovery/assignment/managing connectivity and/or signalling resources in the communications network are generally referred herein to as (belonging to) the control plane. Other management functions (i.e., ones not related to the above specific tasks) are referred to herein as (belonging to) the management plane.

In Figure 2, the protocols that implement the control plane (CP) and/or management plane (MP) functionality are carried by MPLS traffic units which have headers to which have been assigned one or more specially predetermined and ideally network-wide known values. In the best mode of the invention currently contemplated by the inventor, a special label value has a predetermined label value between 4 and 13 and15. In the embodiment shown in Figure 2, to implement OOB CP and/or MP functionality in the MPLS network, all CP and/or MP traffic respectively is allocated a special network-wide label value reserved for the relevant function. This means that when a node receives a packet with the reserved label, it can be recognised as CP and/or MP traffic and is treated accordingly.

In one embodiment of the invention in which an OOB,CP and/or MP is provided, a special network-wide label value (for example, "X") indicates that the MPLS traffic unit conveys CP protocol information and another special network-wide label value (for example, "Y") indicates that the MPLS traffic unit conveys MP protocol information.

In another embodiment of the invention in which an OOB CP and/or MP is provided, a set of reserved labels are assigned to different CP and MP protocols; for example, label value "X" for routing, label value "Y" for signalling, and label value "Z" to indicate any other MP function. This is not a preferred approach of the inventor, however, as the number of globally unique standard reserved label values which have not already been assigned in MPLS is limited, and if another label value is reserved then it may need to be reserved in a network wide manner as mentioned hereinabove.

In another embodiment, and possibly the best practical embodiment of the invention in which an OOB CP and/or MP is provided, a single special network-wide label ("Z" say) is used to convey both CP and MP protocols.

In all of the above embodiments in which an OOB CP and/or MP is provided (albeit to varying degrees), a MPLS network node receiving a traffic unit (i.e., a packet) with the reserved label field value in the MPLS header needs to be able to determine which specific higher layer function/protocol (in the CP or MP) the information is destined for. This requires the receiving MPLS network node to be able to resolve what type of function/protocol is being provided by a traffic unit which has a special network-wide value in its header label field. One way of doing this when the Internet.Protocol (IP) is used inside the said labelled traffic units is to use some or all of the IP's quintuple fields of Destination Address (DA), Source Address (SA), Protocol Identifier (PID), Destination Port (D_Port), Source Port (S_Port) to identify the specific intended target CP or MP protocol.

The provision of an OOB CP and/or MP not only provides an important architectural security benefit but it also enables the use of PseudoWires (PWs) to be avoided. PWs are a direct consequence of the fact that the Label Distribution Protocol (LDP) forces MPLS to treat IP differently from 'all other' clients. As the above type of OOB CP and/or MP means that in principle all data plane clients (including IP) can now be treated in a consistent manner, it also removes to some extent the need for PWs.

A further significant benefit of what has been described so far is that Service Level Agreements can be provided specific to a customer's needs, and there is no longer any need to design and/or operate the whole MPLS network to the service level agreement of the most demanding customer as was done in the prior art for the LDP type of MPLS in those embodiments where an OOB CP and/or MP was not provided.

The above embodiments which describe the use of a special network-wide label value enables a MPLS network to implement OOB management/control plane functionality are not prescriptive as to the suite of CP/MP protocols that can be used to implement the invention. Any suitable set of MP/CP protocols which enable the MPLS network to implement a CO-PS mode layer network that respects the single source requirement of a connection in which loops are prevented and in which traffic units are never re-ordered during normal operation can be used to implement the invention. As long as no loops can occur when routing. MPLS traffic units in the MPLS network, the TTL field of the MPLS header is effectively redundant. Accordingly, a consequence of implementing proper connections in MPLS is that the 8-bit TTL field in the MPLS traffic unit is serving no value.

It is also possible to send only MP information OOB using a special network-wide label value although for practical reasons (including security considerations) the CP and MP protocols are preferably both implemented OOB.

The label field value needs to be known in the network to ensure that all nodes within the MPLS network recognise the "special" meaning of a traffic unit carrying the special label field value. If not, then some nodes may not attempt to invoke the management functionality of the CP and/or MP using the correct higher layer functionality necessary for the implementation of the invoked function. Accordingly, in one embodiment of the invention the special label value has a predetermined value which is known "network-wide" and yet which is not from those remaining in the 0-15 set defined by the MPLS standards known in the art to be reserved as globally unique label values in all MPLS networks. This requires all nodes in the MPLS network to be provisioned in advance with information enabling a received MPLS traffic unit having the special label value to be recognised as relating the relevant traffic type and processed as appropriate (i.e., the traffic unit payload contains control or management plane information).

Those of ordinary skill in the art may be aware of many alternative features having functional equivalence to the features described hereinabove in the context of the invention, and the description should be read as implicitly including such functional equivalents to the described features unless these are explicitly excluded.

For example, the invention may be applied to Transport MPLS (T-MPLS) as well as to MPLS to provide a CP and/or MP for this communications protocol as well.

The text of the abstract repeated below is hereby incorporated into the specification:

A method of managing a multi-protocol label switched (MPLS) network out of band (OOB), the method comprising: indicating a MPLS traffic unit related to a management function by generating at a MPLS node in a MPLS communications network a said MPLS traffic unit having a MPLS header label field; assigning a predetermined label field value to said header label field, said value being known as being assigned in said MPLS network to indicate that said MPLS traffic unit relates to said management function; and propagating said MPLS traffic unit between a plurality of nodes of said MPLS communications network, whereby a receiving MPLS node when processing said MPLS header is able to determine from the predetermined label field value that said MPLS traffic unit comprises data relating to said management function.

## Claims

1. A method of managing a multi-protocol label switched network out of band, the method comprising:
indicating an multi-protocol label switched traffic unit relates to a management function by generating at an multi-protocol label switched node in an multi-protocol label switched communications network a said multi-protocol label switched traffic unit having a multi-protocol label switched header label field;
assigning a predetermined label field value to said header label field, said value being known as being assigned in said multi-protocol label switched network to indicate that said multi-protocol label switched traffic unit relates to said management function; and
propagating said multi-protocol label switched traffic unit between a plurality of nodes of said multi-protocol label switched communications network,
whereby a receiving multi-protocol label switched node when processing said header of said multi-protocol label switched traffic unit is able to determine from the predetermined label field value that said multi-protocol label switched traffic unit comprises data relating to said management function.

2. A method as claimed in claim 1, wherein said a predetermined label field value indicates said type of management function.

3. A method as claimed in claim 1 or 2, wherein the management function is a control plane function, whereby a control plane for the multi-protocol label switched communications network is implemented as an out of band control plane.

4. A method as claimed in any preceding claim, wherein management function is a type of management plane function, whereby a management plane for the multi-protocol label switched communications network is implemented as an out of band management plane.

5. A method as claimed in any previous claim, wherein said method further comprises the receiving multi-protocol label switched node causing the management function indicated by the label value to be invoked.

6. A method as claimed in any previous claim, wherein said predetermined label field value is a label field value uniquely assigned within said multi-protocol label switched communications network.

7. A method as claimed in claim 6, wherein said predetermined label field value uniquely assigned within said multi-protocol label switched communications network is reserved by an multi-protocol label switched standards body as a globally unique label field value.

8. A method as claimed in any previous claim, wherein one or more predetermined label field values uniquely assigned within said multi-protocol label switched communications network indicate respectively one or more control plane functions and one or more other predetermined label field values uniquely assigned within said multi-protocol label switched communications network indicate one or more respective management plane functions.

9. A method as claimed in any previous claim, wherein the value assigned in the multi-protocol label switched header indicates the function to be performed.

10. A method as claimed in claim 9, wherein the value assigned indicates the higher-layer functionality to be invoked by the receiving node to implement the function.

11. A node in a multi-protocol label switched communications network comprising:
a processor for generating an multi-protocol label switched traffic unit having a multi-protocol label switched communications network header and for assigning a label field value to said header which indicates the type of management data comprising said multi-protocol label switched traffic unit; and
a transmitter for propagating said multi-protocol label switched traffic unit to another node of said multi-protocol label switched communications network.

12. A node as claimed in claim 11, wherein said assigned label field value is a unique label field value in said multi-protocol label switched communications network.

13. A node as claimed in claim 11 or 12, wherein said type of management data causes a deceiving node of said multi-protocol label switched traffic unit to invoke control plane functionality in said multi-protocol label switched network.

14. A node as claimed in claim 11 or 12, wherein said type of management data causes a receiving node of said multi-protocol label switched traffic unit to invoke management plane functionality in said multi-protocol label switched network.

15. A signal transmitted in a multi-protocol label switched communications network which includes a multi-protocol label switched traffic unit having a multi-protocol label switched header in which a label field value has been assigned to said header which is unique in said multi-protocol label switched network to indicate to a receiving node of said signal that said multi-protocol label switched traffic unit includes control plane data.

16. A signal transmitted in a multi-protocol label switched communications network which includes a multi-protocol label switched traffic unit having a multi-protocol label switched header in which a label field value has been assigned to said header which is unique in said multi-protocol label switched network to indicate to a receiving node of said signal that said multi-protocol label switched traffic unit includes management plane data.

17. A multi-protocol label switched network comprising:
a plurality of network nodes, at least one node comprising:
a traffic generator arranged to generate a multi-protocol label switched traffic unit including management data and to assign to said multi-protocol label switched traffic unit a header field value having a predetermined label field value indicating said multi-protocol label switched traffic unit includes said type of management data; and
transmitters and/or receivers arranged to propagate said multi-protocol label switched traffic units between nodes of said multi-protocol label switched network,
wherein said value is assigned by all of said plurality of nodes in said multi-protocol label switched network to indicate that a said multi-protocol label switched traffic unit includes said type of management data, whereby when a node in said network receives a said multi-protocol label switched traffic unit with a header having said predetermined label value, said receiving node is arranged to process said header to extract said management data according to its type.

18. A network as claimed in claim 17, wherein said receiving node processing said header then causes the corresponding management functionality to be invoked in said multi-protocol label switched network.

19. A network as claimed in claim 18, wherein said assigned label field value is a globally unique label field value.

20. A network as claimed in any one of claims 17 to 19, wherein said management functionality comprises control plane functionality or management plane functionality.
